# DEMANDE DE BREVET EUROPEEN

(11) **EP 4 181 337 A1**
(43) Date de publication de la demande: **17.05.2023**
(21) Numéro de dépôt: 22205123.7
(22) Date de dépôt: 02.11.2022
(51) Int. Cl.: H02G 3/04, F16L 3/015, H02G 3/08, H02G 3/10, H02G 11/00, G02B 6/38, H02G 3/06, H02G 3/22, H02G 15/04, H02G 15/06, B60R 16/02

(54) **DISPOSITIF DE PASSAGE DE CÂBLE**

(30) Priorité: 10.11.2021 FR 2111931
(71) Demandeur: IZYX Systems, 67720 Weyersheim (FR)
(72) Inventeur: BURY, Jean, 67720 Weyersheim (FR); BROCHOT, Fabien, 44300 Nantes (FR)
(74) Mandataire: Cabinet Bleger-Rhein-Poupon

(57) **Abrégé**

Dispositif de passage de câble (1), notamment de câble électrique, ce dispositif de passage de câble (1) comporte, d'une part, une gaine flexible (2) qui comporte au moins une portion d'extrémité (4 ; 4') qui s'étend selon un axe (X ; X') ainsi qu'une nervure hélicoïdale externe (5) et/ou une rainure hélicoïdale externe (6) et, d'autre part, au moins un boîtier (7 ; 7') qui comporte des moyens de réception (8) qui sont configurés pour recevoir ladite au moins une portion d'extrémité (4 ; 4') de la gaine flexible (2).

Ce dispositif de passage de câble (1) est caractérisé en ce qu'il comporte des moyens d'immobilisation en rotation (9) qui sont configurés pour immobiliser ladite au moins une portion d'extrémité (4; 4') de la gaine flexible (2) par rapport audit au moins un boitier (7 ; 7'), ceci en rotation autour de l'axe (X ; X') selon lequel s'étend ladite au moins une portion d'extrémité (4 ; 4').

## Description

L'invention concerne un dispositif de passage de câble, notamment électrique.

La présente invention concerne le domaine de la fabrication de matériel électrique, plus particulièrement le domaine de la fabrication des dispositifs de passage de câble qui sont conçus pour recevoir intérieurement au moins un câble électrique et pour faire passer au moins un tel câble électrique d'un endroit à un autre. Sans n'y être aucunement limité, un tel passage de câble trouvera une application particulièrement appropriée lorsqu'il s'agit de raccorder électriquement, d'une part, une serrure électrique qui équipe un ouvrant que comporte un bâtiment et, d'autre part, un système de commande (notamment un clavier, un lecteur de cartes, un lecteur d'empreintes ou autre), qui est configuré pour commander une telle serrure électrique, et qui équipe un élément fixe (notamment un dormant, une cloison, un mur ou autre) d'un tel bâtiment.

L'on connait, d'ores et déjà, des dispositifs de passage de câble qui comportent une gaine flexible, qui est configurée pour recevoir intérieurement au moins un câble électrique, et qui comporte, d'une part, deux portions d'extrémité qui s'étendent, chacune, selon un axe et, d'autre part, une nervure hélicoïdale externe qui s'étend entre les deux extrémités de cette gaine flexible. Un tel dispositif de passage de câble comporte, encore, au moins un boîtier qui comporte des moyens de réception qui sont configurés pour recevoir l'une des deux portions d'extrémité de la gaine flexible.

Dans un tel dispositif de passage de câble, la portion d'extrémité de la gaine flexible est susceptible de tourner autour de son axe, ceci par rapport aux moyens de réception du boitier. Sous l'effet de cette rotation, ladite portion d'extrémité de la gaine flexible se dévisse par rapport au boitier jusqu'à ce que cette portion d'extrémité s'échappe hors du boitier et se détache de ce boitier. Le câble électrique contenu dans cette gaine flexible subit, alors, une traction qui est susceptible de fragiliser et de détériorer la connexion électrique de ce câble électrique, notamment avec un bornier ou avec des connecteurs qui sont contenus à l'intérieur du boitier. De plus, le détachement de cette gaine flexible par rapport au boitier permet la pénétration, à l'intérieur de cette gaine flexible et/ou de ce boitier, de saletés et/ou d'humidité qui, là encore, sont susceptibles de détériorer une telle connexion électrique.

La présente invention se veut de remédier aux dispositifs de passage de câble de l'état de la technique.

A cet effet, l'invention concerne un dispositif de passage de câble, notamment de câble électrique. Ce dispositif de passage de câble comporte, d'une part, une gaine flexible qui comporte au moins une portion d'extrémité qui s'étend selon un axe ainsi qu'une nervure hélicoïdale externe et/ou une rainure hélicoïdale externe et, d'autre part, au moins un boîtier qui comporte des moyens de réception qui sont configurés pour recevoir ladite au moins une portion d'extrémité de la gaine flexible. Ce dispositif de passage de câble est caractérisé par le fait qu'il comporte des moyens d'immobilisation en rotation qui sont configurés pour immobiliser ladite au moins une portion d'extrémité de la gaine flexible par rapport audit au moins un boitier, ceci en rotation autour de l'axe selon lequel s'étend ladite au moins une portion d'extrémité.

Selon une autre caractéristique, les moyens d'immobilisation en rotation comportent, d'une part, des moyens de blocage en rotation que comporte ladite au moins une portion d'extrémité de la gaine flexible et, d'autre part, des moyens complémentaires de blocage en rotation, que comporte ledit au moins un boîtier, et qui coopèrent avec les moyens de blocage en rotation.

Encore une autre caractéristique concerne le fait que ladite au moins une portion d'extrémité de la gaine flexible comporte une partie de la nervure hélicoïdale externe et/ou une partie de la rainure hélicoïdale externe qui comporte les moyens de blocage en rotation. Ces moyens de blocage en rotation comportent au moins une entaille.

Selon une caractéristique additionnelle, les moyens complémentaires de blocage en rotation comportent au moins un ergot.

Ainsi, le dispositif de passage de câble conforme à l'invention comporte des moyens d'immobilisation en rotation de ladite au moins une portion d'extrémité de la gaine flexible par rapport audit au moins un boitier. La présence de ces moyens d'immobilisation en rotation permet, avantageusement, à ladite au moins une portion d'extrémité de la gaine flexible (et, donc, à la gaine flexible) de ne pas se dévisser par rapport audit au moins un boitier et, ainsi, de rester fixée au boitier.

Ces moyens d'immobilisation en rotation comportent, d'une part, des moyens de blocage en rotation, que comporte ladite au moins une portion d'extrémité de la gaine flexible, et qui comportent au moins une entaille et, d'autre part, des moyens complémentaires de blocage en rotation, que comporte ledit au moins un boîtier, et qui comportent au moins un ergot. Ces moyens d'immobilisation en rotation sont, avantageusement, constitués par des moyens (entaille, ergot) qui sont de conception simple, faciles à réaliser, efficaces et pérennes et permettent, avantageusement, de solidariser ladite gaine flexible et ledit au moins un boitier de manière fiable et pérenne.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

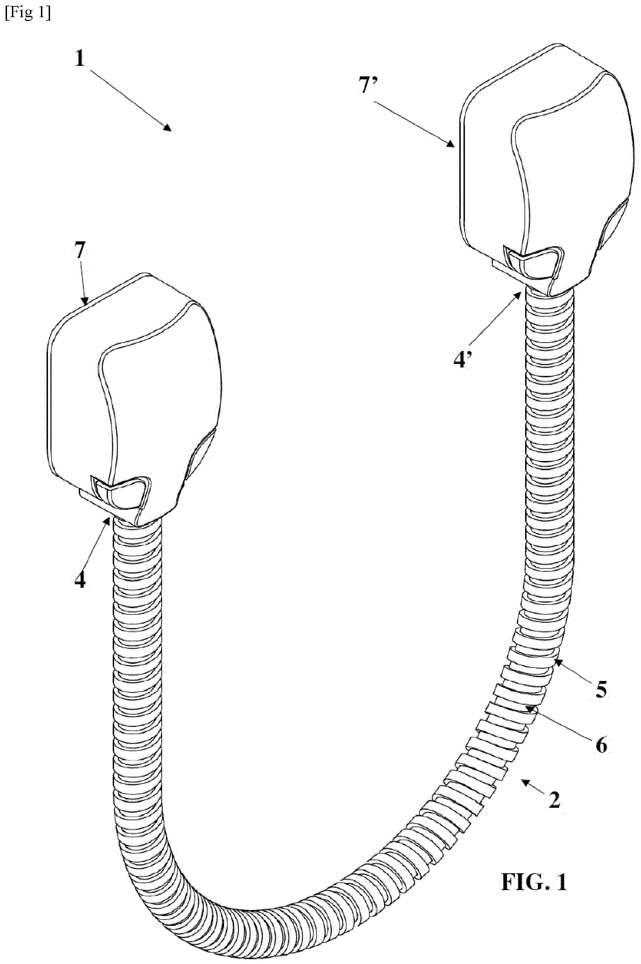

[Fig 1] est une vue schématisée d'un dispositif de passage de câble conforme à l'invention.
[Fig 2] est une vue schématisée et en éclaté d'une partie du dispositif de passage de câble illustré figure 1.
[Fig 3] est une vue schématisée, en éclaté et partielle de la partie du dispositif de passage de câble illustré figure 2.
[Fig 4] est une vue schématisée des éléments de la partie du dispositif de passage de câble illustrée figure 3, ceci en configuration assemblée.

En référence notamment aux figures susmentionnées, la présente invention concerne le domaine de la fabrication de matériel électrique, plus particulièrement le domaine de la fabrication des dispositifs de passage de câble qui sont conçus pour recevoir intérieurement au moins un câble électrique et pour faire passer au moins un tel câble électrique d'un endroit à un autre.

L'invention concerne, alors, un dispositif de passage de câble 1.

Un tel câble est, de préférence, un câble électrique.

Un tel câble électrique comporte au moins un fil électrique qui comporte, d'une part, une âme qui comporte un ou plusieurs brins constitués par un matériau conducteur électrique et, d'autre part, une enveloppe, qui entoure ladite âme, et qui est constituée par un matériau isolant électrique. Un tel câble électrique peut comporter une pluralité de ces fils électriques ainsi qu'une gaine de protection qui entoure ces fils électriques et qui est, notamment, constituée par un matériau isolant électrique.

Un tel dispositif de passage de câble 1 comporte une gaine flexible 2 qui peut être constituée par un matériau synthétique ou (et de préférence) par un matériau métallique, usuellement constitué par un acier, plus particulièrement un acier galvanisé ou inoxydable.

Une telle gaine flexible 2 présente deux extrémités (3 ; 3') et comporte au moins une portion d'extrémité (4 ; 4') qui s'étend selon un axe (X ; X'), voire (et de préférence) deux portions d'extrémité (4 ; 4') qui s'étendent, chacune, selon un axe (X ; X'). A ce propos, on observera que c'est, plus particulièrement, une telle portion d'extrémité (4 ; 4') qui comporte, alors, une telle extrémité (3 ; 3').

Une telle gaine flexible 2 comporte, encore, une nervure hélicoïdale externe 5 et/ou une rainure hélicoïdale externe 6 (notamment définie entre deux spires d'une telle nervure hélicoïdale externe 5). Une telle nervure hélicoïdale externe 5 et/ou une telle rainure hélicoïdale externe 6 s'étend sur toute la longueur de la gaine flexible 2, notamment d'une extrémité 3 à l'autre extrémité 3'de cette gaine flexible 2. On observera que ladite au moins une portion d'extrémité (4 ; 4') de la gaine flexible 2 comporte, alors, une partie de la nervure hélicoïdale externe 5 et/ou une partie de la rainure hélicoïdale externe 6.

Un tel dispositif de passage de câble 1 comporte, également, au moins un boitier (7 ; 7'), voire (et de préférence) deux boitiers (7 ; 7').

Ledit au moins un boîtier (7 ; 7') comporte (de préférence intérieurement) des moyens de réception 8 qui sont configurés pour recevoir ladite au moins une portion d'extrémité (4 ; 4') de la gaine flexible 2. Un tel boîtier (7 ; 7') équipe, alors, une telle portion d'extrémité (4 ; 4') de ladite gaine flexible 2.

Selon un mode de réalisation préféré, le dispositif de passage de câble 1 comporte deux boitiers (7 ; 7') qui comportent, chacun, des moyens de réception 8 d'une telle portion d'extrémité (4 ; 4') d'une telle gaine flexible 2. L'un 7 des deux boitiers (7 ; 7') comporte, alors, des moyens de réception 8 de l'une 4 des deux portions d'extrémité (4 ; 4') de la gaine flexible 2 tandis que l'autre 7' des deux boitiers (7 ; 7') comporte des moyens de réception 8 de l'autre 4' des deux portions d'extrémité (4 ; 4') de cette gaine flexible 2. L'un 7 de ces deux boitiers (7 ; 7') équipe, alors, l'une 4 des deux portions d'extrémité (4 ; 4') de la gaine flexible 2 tandis que l'autre 7' des deux boitiers (7 ; 7') équipe l'autre 4' des deux portions d'extrémité (4 ; 4') de cette gaine flexible 2.

Selon l'invention, le dispositif de passage de câble 1 comporte des moyens d'immobilisation en rotation 9 qui sont configurés pour immobiliser ladite au moins une portion d'extrémité (4 ; 4') de la gaine flexible 2 par rapport audit au moins un boitier (7 ; 7'), ceci en rotation autour de l'axe (X ; X') selon lequel s'étend ladite au moins une portion d'extrémité (4 ; 4').

Selon un mode de réalisation particulier de l'invention, le dispositif de passage de câble 1 comporte, d'une part, des moyens d'immobilisation en rotation 9 qui sont configurés pour immobiliser l'une 4 des deux portions d'extrémité (4 ; 4') de la gaine flexible 2 par rapport à l'un 7 des deux boitier (7 ; 7'), ceci en rotation autour de l'axe X selon lequel s'étend cette portion d'extrémité (4 ; 4') et, d'autre part, d'autres moyens d'immobilisation en rotation 9 qui sont configurés pour immobiliser l'autre portion d'extrémité 4' des deux portions d'extrémité (4 ; 4') de la gaine flexible 2 par rapport à l'autre boitier 7' des deux boitiers (7 ; 7'), ceci en rotation autour de l'axe X' selon lequel s'étend cette autre portion d'extrémité 4'.

Selon une autre caractéristique, les moyens d'immobilisation en rotation 9 comportent, d'une part, des moyens de blocage en rotation 10 que comporte ladite au moins une portion d'extrémité (4 ; 4') de la gaine flexible 2, voire que comportent les deux portions d'extrémité (4 ; 4') de cette gaine flexible 2 et, d'autre part, des moyens complémentaires de blocage en rotation 10', qui coopèrent avec les moyens de blocage en rotation (10), et que comporte ledit au moins un boîtier (7 ; 7'), voire que comportent les deux boitiers (7 ; 7').

A ce propos, on observera que c'est, plus particulièrement, la partie de la nervure hélicoïdale externe 5 et/ou la partie de la rainure hélicoïdale externe 6, que comporte ladite au moins une portion d'extrémité (4 ; 4), qui comporte les moyens de blocage en rotation 10.

En fait, ces moyens de blocage en rotation 10 comportent au moins une entaille 11.

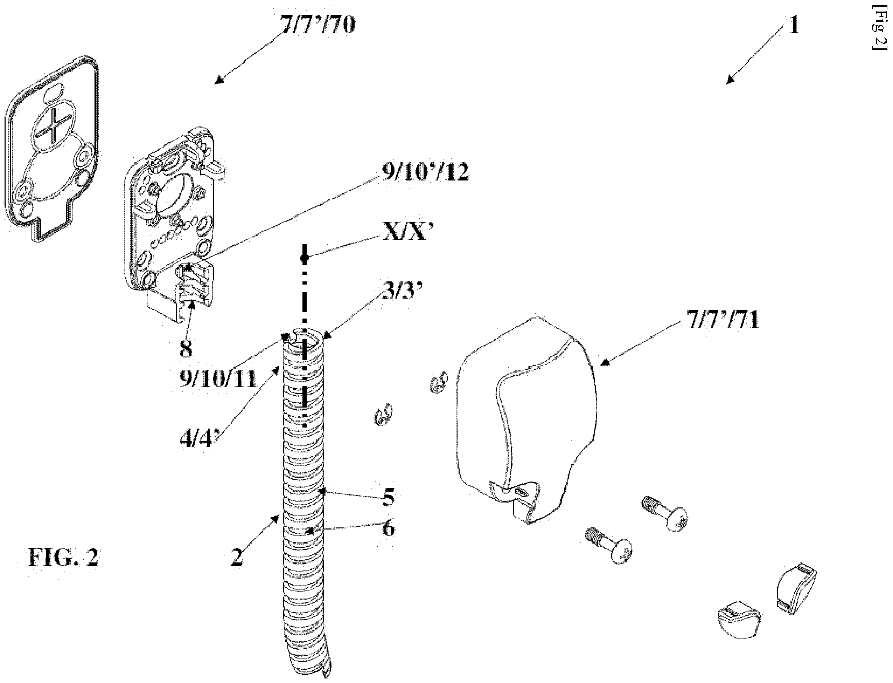

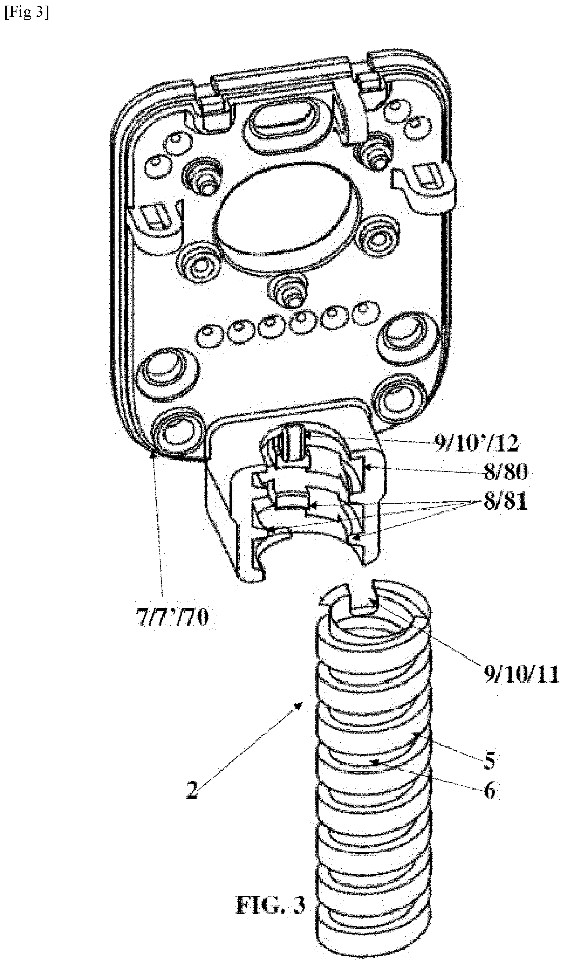

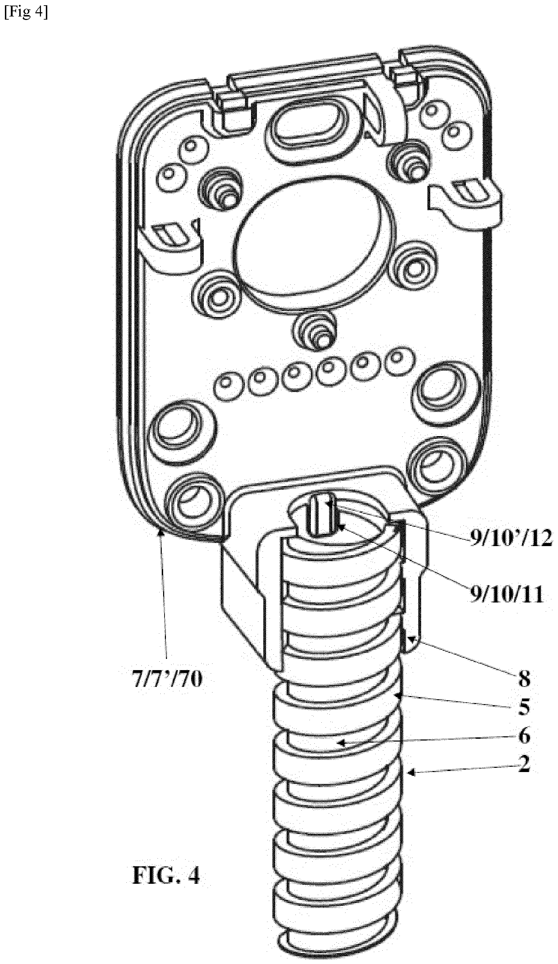

Tel que visible sur les figures 2 à 4, ladite au moins une entaille 11 s'étend à partir de l'extrémité (3 ; 3') que comporte la gaine flexible 2, plus particulièrement à partir de l'extrémité (3 ; 3') que comporte ladite au moins une portion d'extrémité (4 ; 4') que comporte cette gaine flexible 2

Encore une autre caractéristique concerne le fait que ladite au moins une entaille 11 s'étend selon une direction parallèle à l'axe (X ; X') selon lequel s'étend ladite au moins une portion d'extrémité (4 ; 4').

Tel que mentionné ci-dessus, les moyens d'immobilisation en rotation 9 comportent des moyens complémentaires de blocage en rotation 10'.

Tel que visible sur les figures 2 à 4, ce sont, plus particulièrement, les moyens de réception 8, que comporte ledit au moins un boitier (7 ; 7'), qui comportent ces moyens complémentaires de blocage en rotation 10'.

En fait, ces moyens complémentaires de blocage en rotation 10' comportent au moins un ergot 12.

Selon une autre caractéristique, les moyens de réception 8 comportent une rainure hélicoïdale interne 80 qui est configurée pour recevoir la nervure hélicoïdale externe 5 que comporte la gaine flexible 2, plus particulièrement que comporte ladite au moins une portion d'extrémité (4 ; 4') de cette gaine flexible 2. De manière alternative ou (et de préférence) additionnelle, ces moyens de réception 8 comportent une nervure hélicoïdale interne 81 qui est configurée pour recevoir la rainure hélicoïdale externe 6 que comporte la gaine flexible 2, plus particulièrement que comporte ladite au moins une portion d'extrémité (4 ; 4') de cette gaine flexible 2.

A ce propos, on observera que ledit au moins un ergot 12 (des moyens complémentaires de blocage en rotation 10') s'étend en saillie par rapport à la rainure hélicoïdale interne 80 (notamment par rapport au fond de cette rainure hélicoïdale interne 80) et/ou par rapport à la nervure hélicoïdale interne 81.

Encore une autre caractéristique concerne le fait que ledit au moins un boîtier (7 ; 7') comporte une platine 70, qui est destinée à être fixée sur un support, et qui comporte une partie des moyens de réception 8 de ladite au moins une portion d'extrémité (4 ; 4') de la gaine flexible (2), plus particulièrement une partie de ladite rainure hélicoïdale interne 80 et/ou une partie de ladite nervure hélicoïdale interne 81.

De manière additionnelle, ledit au moins un boitier (7 ; 7') comporte un capot 71 qui est destiné à être positionné par-dessus ladite platine 70 (plus particulièrement pour refermer ledit au moins un boitier 7 ; 7'), et qui comporte une autre partie de ces moyens de réception 8, plus particulièrement une autre partie de ladite rainure hélicoïdale interne 80 et/ou une autre partie de ladite nervure hélicoïdale interne 81.

A ce propos, on observera que c'est, plus particulièrement, la partie des moyens de réception 8, que comporte la platine 70, qui comporte ledit au moins un ergot 12 que comportent les moyens complémentaires de blocage 10'.

## Revendications

1. Dispositif de passage de câble (1), notamment de câble électrique, ce dispositif de passage de câble (1) comporte, d'une part, une gaine flexible (2) qui comporte au moins une portion d'extrémité (4 ; 4') qui s'étend selon un axe (X ; X') ainsi qu'une nervure hélicoïdale externe (5) et/ou une rainure hélicoïdale externe (6), d'autre part, au moins un boîtier (7 ; 7') qui comporte des moyens de réception (8) qui sont configurés pour recevoir ladite au moins une portion d'extrémité (4 ; 4') de la gaine flexible (2), et, d'autre part encore, des moyens d'immobilisation en rotation (9), qui sont configurés pour immobiliser ladite au moins une portion d'extrémité (4; 4') de la gaine flexible (2) par rapport audit au moins un boitier (7 ; 7'), ceci en rotation autour de l'axe (X ; X') selon lequel s'étend ladite au moins une portion d'extrémité (4 ; 4'), et qui comportent, d'une part, des moyens de blocage en rotation (10) que comporte ladite au moins une portion d'extrémité (4 ; 4') de la gaine flexible (2) et, d'autre part, des moyens complémentaires de blocage en rotation (10'), qui coopèrent avec les moyens de blocage en rotation (10), et que comporte ledit au moins un boîtier (7 ; 7'), **caractérisé par le fait que** les moyens de blocage en rotation (10) comportent au moins une entaille (11) tandis que les moyens complémentaires de blocage en rotation (10') comportent au moins un ergot (12).

2. Dispositif de passage de câble (1) selon la revendication 1, **caractérisé par le fait que** ladite au moins une portion d'extrémité (4 ; 4') de la gaine flexible (2) comporte une partie de la nervure hélicoïdale externe (5) et/ou une partie de la rainure hélicoïdale externe (6) qui comporte les moyens de blocage en rotation (10).

3. Dispositif de passage de câble (1) selon l'une quelconque des revendications précédentes, **caractérisé par le fait que** ladite au moins une entaille (11) s'étend à partir d'une extrémité (3 ; 3') que comporte la gaine flexible (2), plus particulièrement que comporte ladite au moins une portion d'extrémité (4 ; 4') de cette gaine flexible (2).

4. Dispositif de passage de câble (1) selon l'une quelconque des revendications précédentes, **caractérisé par le fait que** ladite au moins une entaille (11) s'étend selon une direction parallèle à l'axe (X ; X') selon lequel s'étend ladite au moins une portion d'extrémité (4 ; 4').

5. Dispositif de passage de câble (1) selon l'une quelconque des revendications précédentes, **caractérisé par le fait que** les moyens de réception (8), que comporte ledit au moins un boitier (7 ; 7'), comportent les moyens complémentaires de blocage en rotation (10').

6. Dispositif de passage de câble (1) selon l'une quelconque des revendications précédentes, **caractérisé par le fait que** les moyens de réception (8) comportent une rainure hélicoïdale interne (80) et/ou une nervure hélicoïdale interne (81) tandis que ledit au moins un ergot (12) s'étend en saillie par rapport à la rainure hélicoïdale interne (80) et/ou par rapport à la nervure hélicoïdale interne (81).

7. Dispositif de passage de câble (1) selon l'une quelconque des revendications précédentes, **caractérisé par le fait que** ledit au moins un boitier (7 ; 7') comporte, d'une part, une platine (70) qui est destinée à être fixée sur un support et qui comporte une partie des moyens de réception (8) de ladite au moins une portion d'extrémité (4 ; 4') de la gaine flexible (2) et, d'autre part, un capot (71) qui est destiné à être positionné par-dessus ladite platine (70), et qui comporte une autre partie de ces moyens de réception (8).

8. Dispositif de passage de câble (1) selon la revendication 7, **caractérisé par le fait que** la partie des moyens de réception (8), que comporte la platine (70), comporte ledit au moins un ergot (12) que comportent les moyens complémentaires de blocage (10').
